# EUROPEAN PATENT APPLICATION

(11) **EP 0 868 859 A2**
(43) Date of publication of application: **07.10.1998**
(21) Application number: 98200926.8
(22) Date of filing: 24.03.1998
(51) Int. Cl.: A44B 11/00

(54) **Plastic buckle for belts and mould for moulding such buckle**

(30) Priority: 25.03.1997 IT MI970204 U
(71) Applicant: Tecnotexil s.r.l., 24021 Albino (Bergamo) (IT)
(72) Inventor: Facchinetti, Anna Maria, 24021 Albino Bergamo (IT)
(74) Representative: Faraggiana, Vittorio, Dr. Ing.

(57) **Abstract**

A moulded plastic buckle comprises a body (11) having a portion (12) for permanently securing it to one end of a belt (14) and a portion (15) for removably connecting it to the other end of the belt. A logo (19) is provided on the securing portion (12). The logo (19) crosses a visible area (22) of the belt (14) and constitutes an lement for securing the latter.

## Description

This invention refers to a buckle made of moulded plastic at the end of belts or other strap-shaped elements. The invention also refers to a mould for producing such buckles.

The method of producing buckles by moulding them from plastic material is widely used in the known technique thanks to the advantages it offers in terms of manufacturing costs and simplicity.

It is customary for the manufacturer or whoever markets them to apply logos or wording on the buckles to personalize the products. The logo or wording can be made separately and then attached to the buckle by means of special labels or plates, or can be made in one piece with the buckle during moulding, usually in relief. In both cases, a sufficient portion of the buckle to be used specifically for this purposes must be provided. The surface of the buckle necessarily comprises holes made during the moulding by the pins which position the buckle in the mould. Since space must be provided for the logo, this obviously results in the buckles being made much larger than necessary, with a consequent waste of material and voluminosity of the finished product. In addition, in the case of logos or writing made in relief in one piece with the buckle, the logo or the writing (unless costly two-colour printing processes are used) are of the same colour as the buckle and consequently not very clearly visible.

The general scope of this invention is to obviate the aforementioned problems by providing a buckle for belts and the like, in which logos and writing directly form a functional part of the buckle itself, without the need to provide special buckle portions designed exclusively to accommodate the logo.

This scope is achieved according to the invention by providing a moulded plastic buckle comprising a body having a portion for permanently securing it to one end of a belt, a logo being produced in one piece with said securing portion, characterized in that the logo extends between two sides of the body, crossing a clearly visible area of the belt.

According to the invention, a mould is also provided for manufacturing buckles, comprising a chamber communicating with the outside through ducts through which the moulding material is fed and comprising lateral portions for moulding the sides of the buckle and top portions for respectively moulding a portion of the buckle designed to incorporate one end of the belt and a portion of the buckle designed for its removable connection to the other end of the belt, characterized in that the portion of the mould designed to incorporate the belt is provided with a baffle for holding the belt in position during the moulding of the buckle, passages being open in the baffle between the lateral portions of the chamber for moulding a logo.

The innovative principles of this invention and its advantages with respect to the known technique will be more clearly evident from the following description of a possible exemplificative embodiment applying such principles, with reference to the accompanying drawings, in which:

Fig. 1 shows a plan view of a buckle according to the invention, applied to the end of a belt.

Fig. 2 shows a view along the line II-II of Fig. 1.

Fig. 3 shows a cutaway plan view of a mould for producing the buckle of Fig. 1.

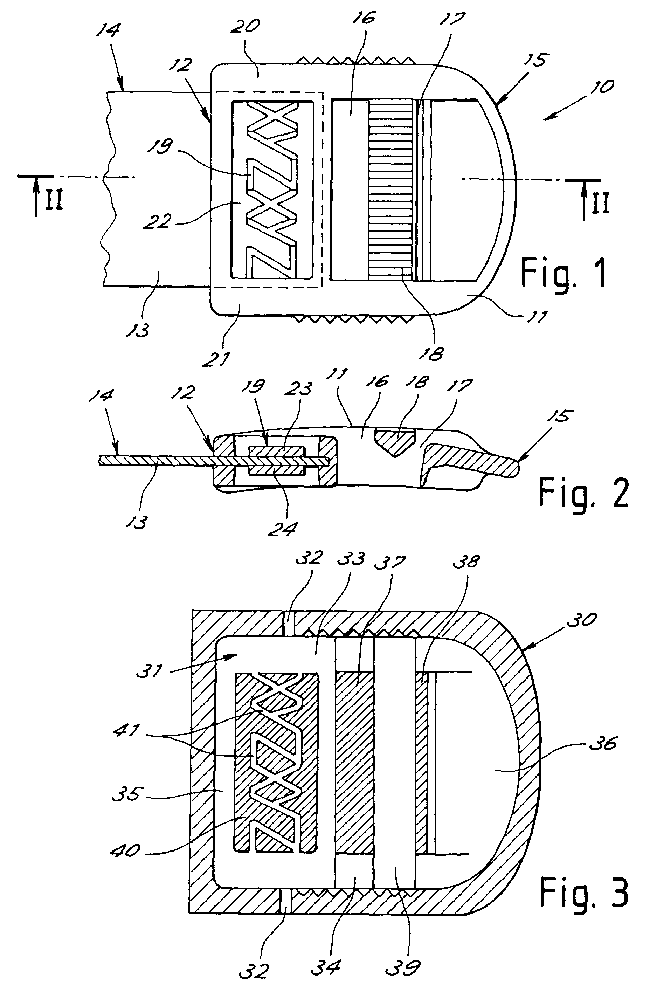

With reference to Fig. 1, a buckle 10 comprises a body 11 obtained by moulding from plastic material. The material can be of any kind normally used for this type of product, for example acetal, polyammide, polyester, polypropylene, etc..

The body 11 is made so as to securely incorporate, at one of its ends 12, a first end 13 of a belt 14, as can be clearly seen in Fig. 2. At the other end 15, the body 11 of the buckle comprises means for securing, in the known way, the second end (not shown) of the belt 14 or one end of another belt, depending upon the type of connection the buckle is intended for. The fastening means comprise slots 16, 17 for introduction of the belt, separated by a bridge 18, advantageously serrated to offer a firm grip on the belt.

The portion 12 of buckle which serves as an element for securing it to the end of the belt 14 is shaped so as to comprise a logo 19. The term logo is understood here to mean any writing, coat of arms or other representation designed to serve as a distinctive element of the article.

According to the innovative principles of this invention, the logo 19 is made in the form of a bridge joining the sides 20, 21 of the buckle, extending across a visible area 22 of the belt. Advantageously, the logo 19 itself constitutes an element for retaining the belt. As can be seen in Fig. 2, the logo 19 is composed of two specular portions 23, 24 facing each other so as to each adhere to a respective face of the belt 14.

It is obvious that, to position the logo, the buckle according to the invention does not use a portion devoted exclusively for this purpose, but uses an element which constitutes a means for securing the belt. Moreover, the shape of the logo, like a bridge between the sides of the buckle, makes it possible to keep the belt visible in the area 22 around the logo itself, thereby obtaining an appreciable visual contrast between the logo and the surface of the belt whenever these elements are made in sufficiently different colours, tones or surface finishes.

Fig. 3 shows a mould 30 for moulding a buckle 10. As is known to the expert in the field, moulds for producing these kinds of articles are composed of two juxtaposed half-shells, closed over the end 13 of the belt 14 to which the buckle must be applied. Since, in correspondence with the area for moulding the portion 12 of buckle designed to secure the belt, the two half-moulds are substantially specular, Fig. 3 shows only the lower half-mould, in a cutaway view along a plane parallel to the surface of the belt in order to visually highlight its configuration.

The mould 30 comprises a substantially annular chamber 31, communicating with the outside by means of suitable ducts 32 through which the moulding material is fed.

The chamber 32 comprises lateral portions 33, 34, designed for moulding the sides 20, 21 of the buckle, and top portions 35, 36, respectively designed for moulding the ends 12, 15 of the buckle.

In correspondence with the portion 36, the chamber 31 comprises two baffles 37, 38 to constitute the slots 16, 17, separated by a passage 39 to form the bridge 18.

Conversely, in the central part of the portion 35, the chamber 31 has a protrusion 40 designed, in cooperation with a corresponding protrusion in the other half-mould, to hold the belt in place during the moulding, thereby simultaneously producing the visual portion 22 of the buckle around the logo 19.

The protrusion 40 is provided with passages 41 (whose shape depends upon the logo to be produced) which connect the lateral portions 33, 34 to form the lower part 24 of the logo. In the corresponding protrusion on the other half-mould, not shown, there are specular passages to produce the upper part 23 of the logo. It should be noted that the specularity of the passages 41 in the two halves of the mould enables the half-moulds to be kept tightly closed over the belt during the moulding.

The foregoing description of an embodiment applying the innovative principles of this invention is obviously given by way of example in order to illustrate such innovative principles and should not therefore be understood as a limitation to the sphere of the invention claimed herein.

In particular, the exact conformation of the buckle and the mould may vary in relation to particular aesthetical and functional features required from time to time.

Moreover, the logo in the mould can be produced on a replaceable block 40, for example to adapt the mould to the productions of different customers.

## Claims

1. Moulded plastic buckle, comprising a body (11) having a portion (12) for permanently securing it to one end (13) of a belt (14), a logo (19) being produced in one piece with said securing portion (12), characterized in that the logo (19) extends between two sides (20, 21) of the body (11), crossing a clearly visible area (22) of the belt (14).

2. Buckle as claimed in claim 1, characterized in that the logo (19) constitutes an element for retaining the belt (14).

3. Buckle as claimed in claim 2, characterized in that the logo (19) is composed of two portions (23, 24) facing each other, each adhering to a respective face of the belt (14).

4. Buckle as claimed in claim 3, characterized in that the two facing portions (23, 24) of the logo (19) are specular.

5. Buckle as claimed in claim 1, characterized in that the logo (19) is visually contrasted with respect to the surface of the belt (14).

6. Mould for manufacturing buckles, comprising a chamber (31) communicating with the outside through ducts (32) through which the moulding material is fed and comprising lateral portions (33, 34) for moulding the sides of the buckle and top portions (35, 36) for respectively moulding a portion of the buckle designed to incorporate one end of the belt and a portion of the buckle designed for its removable connection to the other end of the belt, characterized in that the portion (35) of the mould designed to incorporate the belt is provided with a baffle (40) for holding the belt in position during the moulding of the buckle, passages (41) being open in the baffle between the lateral portions (33, 34) of the chamber (31) for moulding a logo.

7. Mould as claimed in claim 6, characterized in that it is composed of two half-moulds facing each other which are substantially specular in correspondence with the portion (35) designed to incorporate the belt, each half-mould comprising a portion of baffle (40) and a portion of passages (41) for producing the logo.

8. Mould as claimed in claim 7, characterized in that the portions of baffle (40) on each half-mould face each other to create a clearly visible are of the belt and the respective portions of the passages (41) are specular.
